# FASCICULE DE BREVET EUROPEEN

(11) **EP 0 985 834 B1**
(45) Date de publication et mention de la délivrance du brevet: **23.04.2003**
(21) Numéro de dépôt: 99401575.8
(22) Date de dépôt: 24.06.1999
(51) Int. Cl.: F16B 41/00, F16B 5/06

(54) **Dispositif de fixation d'au moins une pièce sur une autre pièce, en forme de plaque**
Vorrichtung in Form einer Platte zum Befestigen mindestens eines Teils auf einem anderen
Device in the form of a plate for fastening at least one element on to another one

(30) Priorité: 10.09.1998 FR 9811314
(43) Date de publication de la demande: 15.03.2000
(73) Titulaire: Rapid S.A., 75852 Paris (FR)
(72) Inventeur: Léon, Jean-Pierre, 78800 Houilles (FR)
(74) Mandataire: Bentz, Jean-Paul

(56) Documents cités:
- FR-A- 2 697 062

## Description

L'invention est relative à un dispositif de fixation d'au moins une pièce sur une autre pièce, ce dispositif présentant la forme d'une plaque.

Un tel dispositif peut notamment être utilisé pour fixer ensemble deux panneaux ou encore pour maintenir une pluralité de vis ou d'écrous sur un élément, lui-même destiné à être fixé à un autre élément.

Ainsi, le document FR-2 697 062 décrit un dispositif facilitant les opérations de vissage, en maintenant simultanément une pluralité de vis ou d'écrous avec une certaine pression sur un des éléments à fixer, et en les immobilisant en rotation.

Ce dispositif comprend une plaque comportant des ouvertures susceptibles de recevoir chacune une tête de vis ou un écrou et des moyens de clippage de la plaque sur ledit élément.

Ces moyens de clippage sont ménagés dans une partie de la plaque qui est déformable sous l'effet d'une pression. Ces moyens se composent de deux crochets découpés dans la plaque, repliés orthogonalement au plan de celle-ci et écartés l'un de l'autre. Ces moyens coopèrent avec un orifice ménagé dans l'élément.

Ce dispositif est très utile pour faciliter et réaliser de façon rapide un assemblage nécessitant une pluralité de boulons.

Cependant, il est apparu que les crochets pouvaient se dégager de l'élément sur lequel ils étaient initialement accrochés et qu'ils n'assuraient pas de maintien positif.

L'invention a pour but de pallier ces inconvénients en proposant un dispositif de fixation d'au moins une pièce sur une autre pièce, ce dispositif assurant un maintien positif tout en étant d'une utilisation aisée.

L'invention concerne donc un dispositif de fixation d'au moins une pièce sur une autre pièce, ce dispositif présentant la forme d'une plaque et comportant deux crochets repliés d'un côté de la plaque, lesdits crochets étant susceptibles de pénétrer dans un orifice ménagé dans au moins ladite autre pièce pour s'accrocher sur elle, caractérisé en ce qu'il comprend également, en regard desdits crochets et de l'autre côté de la plaque, une patte qui peut s'insérer, sous l'effet d'une pression, entre lesdits crochets pour les bloquer sur ladite autre pièce .

De préférence, ces crochets forment les extrémités de deux languettes découpées dans ladite plaque et repliées sensiblement perpendiculairement au plan de celle-ci.

De préférence, ladite patte est également découpée dans ladite plaque.

Dans une forme de réalisation préférée de l'invention, ladite patte présente une forme générale en L, avec une grande branche élastiquement reliée à la plaque et une petite branche repliée vers ladite plaque, sensiblement perpendiculairement au plan de celle-ci.

De préférence, ladite grande branche de la patte comporte une platine formant bouton poussoir.

Egalement de préférence, ladite petite branche de la patte comporte, à son extrémité libre, un bord replié vers l'extérieur.

De façon préférée, les parties repliées des deux languettes sont situées dans deux plans sensiblement parallèles et très proches, les parties repliées convergeant l'une vers l'autre, au repos, au niveau de leurs extrémités formant crochets.

Dans une forme de réalisation préférée, les crochets comportent des évidements en vis-à-vis et dans lesquels ladite patte vient se bloquer lorsqu'elle est insérée, par pression, entre les deux crochets .

De préférence, les languettes et la patte sont situées dans une ouverture en forme de quadrilatère, formée dans ladite plaque.

Dans un mode préféré de réalisation, la plaque présente une forme sensiblement rectangulaire et comporte des rebords longitudinaux pour en assurer la rigidité.

Le dispositif selon l'invention peut notamment être utilisé pour la fixation d'une pluralité de vis, écrous ou analogues sur une autre pièce, ladite plaque comportant des ouvertures susceptibles de recevoir chacune une tête de vis ou un écrou et de les immobiliser en rotation.

Le dispositif selon l'invention peut également être utilisé pour la fixation de deux panneaux, chacun desdits panneaux comportant un orifice, ces orifices étant sensiblement en regard, lorsque les deux panneaux sont en contact, pour permettre le passage desdits crochets.

L'invention sera mieux comprise, et d'autres buts, avantages et caractéristiques de celle-ci apparaîtront plus clairement à la lecture de la description qui suit et qui est faite en référence aux dessins annexés, représentant des exemples de modes de réalisation de l'invention, et dans lesquels :

La figure 1 est une vue en perspective d'un dispositif de fixation selon l'invention, avant montage sur une pièce, destiné à maintenir des vis sur cette pièce, du type plaque, cette pièce étant également destinée à être fixée sur une autre pièce (non représentée).

La figure 2 est une vue en perspective du dispositif de fixation selon l'invention, en position montée sur la pièce à fixer.

Les figures 3 et 4 sont des vues en bout du dispositif selon l'invention, illustrant deux étapes de montage du dispositif de fixation sur la pièce à fixer.

La figure 5 est une vue en coupe transversale d'un dispositif de fixation selon l'invention, en place sur deux panneaux pour les fixer ensemble.

Les éléments communs aux différentes figures seront désignés par les mêmes repères.

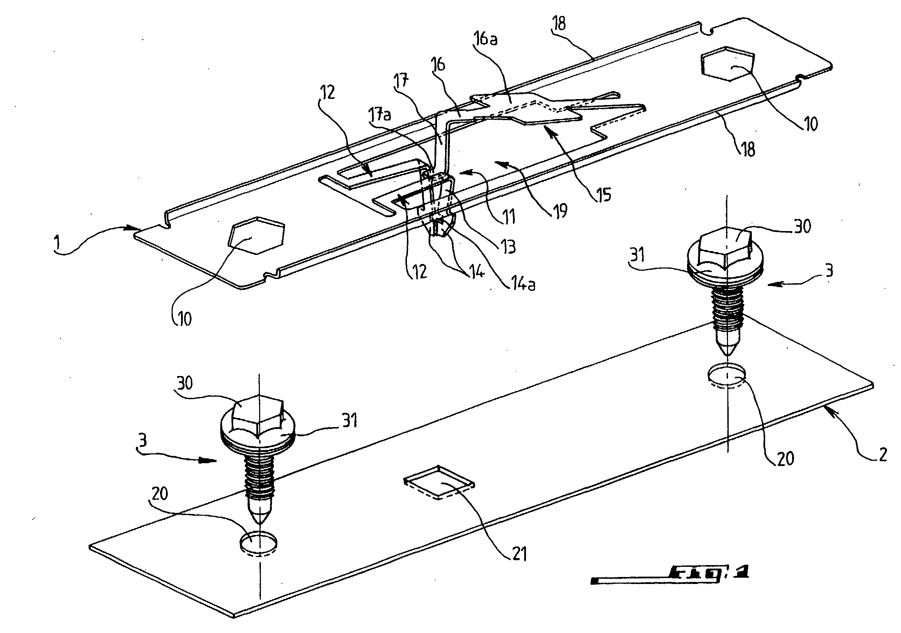

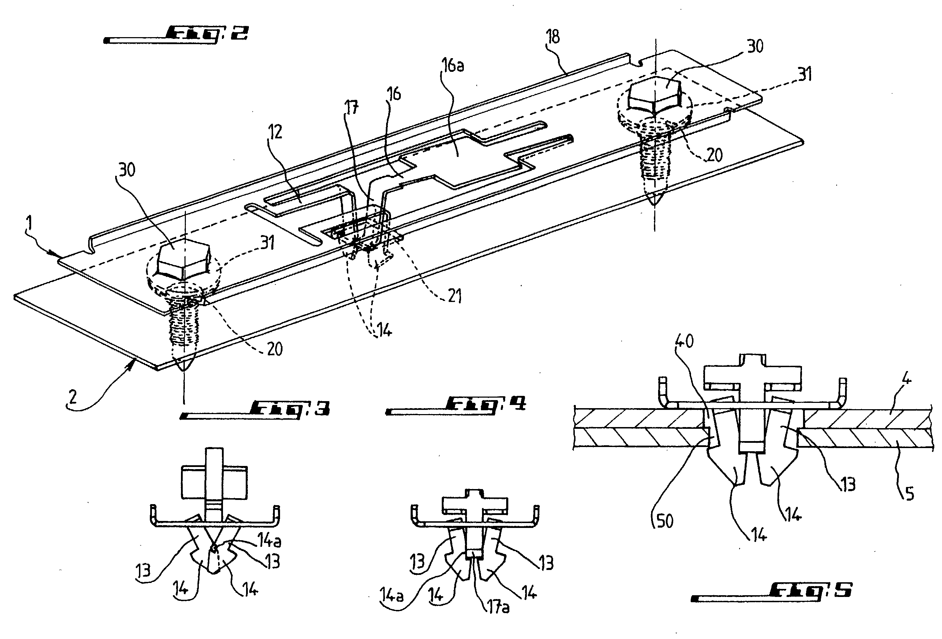

On se reporte tout d'abord aux figures 1 et 2 qui illustrent un dispositif de fixation selon l'invention destiné au maintien de vis sur une pièce.

Ce dispositif comprend une plaque 1, ici de forme sensiblement rectangulaire, muni d'ouvertures 10 susceptibles de recevoir chacune une tête 30 de vis 3.

Cependant, la plaque 1 pourrait présenter une autre forme et également comporter un nombre différent d'ouvertures 10.

La plaque 1 est munie de moyens 11 qui permettent son montage par clippage sur une pièce 2.

Par ailleurs, les ouvertures 10 présentent une forme hexagonale correspondant à la forme hexagonale de la tête 30 des vis 3. Ainsi, comme le montre la figure 2, après montage de la plaque 1 sur la pièce 2, la tête 30 des vis 3 est reçue dans les ouvertures 10 et ces vis sont immobilisées en rotation.

Par ailleurs, la pièce 2 comporte deux orifices 20 pour le passage des vis 3, ainsi qu'un orifice 21 dans lequel peuvent s'accrocher les moyens 11 de clippage, prévus sur la plaque 1.

Ces moyens de clippage 11 se composent de deux languettes 12 qui sont découpées dans la plaque 1 et repliées sensiblement perpendiculairement au plan de celle-ci.

Les parties repliées 13 des languettes se terminent par des crochets 14.

Avant montage et comme le montrent notamment les figures 1 et 3, les deux parties repliées 13 sont situées dans deux plans sensiblement parallèles et qui sont très proches de l'autre.

De plus, au repos, les parties repliées 13 des languettes sont écartées et convergent l'une vers l'autre, au niveau de leurs extrémités formant crochets 14.

On peut également noter que la largeur maximale totale de l'ensemble des deux parties repliées 13 est légèrement inférieure aux dimensions de l'orifice 21.

La plaque 1 comporte également une patte 15 qui est découpée dans la plaque 1.

Cette patte 15 présente une forme générale en L qui s'étend du côté opposé aux crochets 14, par rapport à la plaque 1.

Cette patte 15 comporte une grande branche 16 élastiquement reliée à la plaque 1 et une petite branche 17 repliée vers ladite plaque 1, sensiblement perpendiculairement au plan de celle-ci.

Comme le montrent les figures 1 et 2, la grande branche 16 de la patte 15 comporte une platine 16a formant bouton poussoir.

Par ailleurs, la petite branche 17, comporte, à son extrémité libre, un bord 17a replié vers l'extérieur.

Comme le montrent les figures 1 à 4, la position relative des languettes 12 et de la patte 15 est telle que la patte 15 peut s'insérer dans l'intervalle entre les deux languettes 12.

Enfin, la plaque 1 comporte des rebords longitudinaux 18 pour en assurer la rigidité.

Le montage du dispositif de fixation de vis 3 selon l'invention sur la pièce 2 va maintenant être décrit en référence aux figures 1 à 4.

Les vis 3 sont tout d'abord introduites dans les orifices 20 de la pièce 2. Les vis 3 comportent une collerette 31 qui permet de les retenir sur la pièce 2.

La plaque 1 est ensuite placée sur les vis 3, de façon à ce que les têtes 30 des vis passent à travers les ouvertures 10 de la plaque, les parties repliées 13 des languettes 12 pénétrant alors dans l'ouverture 21 de la pièce 2.

Ainsi, la plaque 1 est en appui sur les collerettes 31 des vis 3.

Par ailleurs, les languettes 12 et la patte 15 se trouvent dans la position illustrée à la figure 3, le bord replié 17a de la petite branche 17 de la patte 15 étant situé dans l'intervalle entre les deux parties repliées 13 des languettes 12.

Ensuite, une pression est exercée sur la patte 15, au niveau du bouton poussoir 16a. Cette pression provoque l'enfoncement de la petite branche 17 de la patte, laquelle vient se loger entre les deux crochets 14, en les écartant. Ceci est notamment illustré sur la figure 4.

Dans cette position, les crochets 14 sont élastiquement écartés l'un de l'autre pour venir s'accrocher sur le dessous de la pièce 2.

De préférence, les crochets 14 comportent des évidements 14a en vis à vis, dans lesquels le bord replié 17a de la patte 15 vient se bloquer, lorsque la patte est insérée par pression dans l'intervalle entre les deux crochets.

Lorsque le dispositif de fixation selon l'invention est monté comme le montrent les figures 2 et 4, les vis 3 sont immobilisées en rotation grâce aux ouvertures 10 en prise avec les têtes 30 de ces vis et les vis peuvent également résister aux efforts de poussée, lors du vissage et du serrage des écrous (non représentés), pour assurer l'assemblage de la pièce 2 avec une autre pièce qui n'est pas représentée.

Par ailleurs, l'insertion de la patte 15 entre les deux crochets 14 permet d'assurer et de maintenir l'accrochage des crochets 14 sur le dessous de la pièce 2, le blocage des crochets en position étant encore mieux assuré lorsque les évidements 14a sont prévus.

Une fois le vissage et le serrage des écrous réalisés, la plaque 1 reste solidaire des pièces assemblées et constitue en quelque sorte un outil perdu. Dans cette utilisation, le dispositif de fixation selon l'invention permet de faciliter et de rendre plus rapide la réalisation d'un assemblage nécessitant une pluralité de boulons, ce dispositif permettant également des assemblages à l'aide d'outils automatiques et robotisés.

On se réfère maintenant à la figure 5 qui illustre une autre application du dispositif de fixation selon l'invention.

Pour cette application, le dispositif de fixation est semblable à celui qui a été illustré en référence aux figures précédentes, des ouvertures 10 pour le passage de vis n'étant par contre plus nécessaires.

La figure 5 montre, en coupe, deux panneaux 4 et 5.

Chacun d'eux comporte un orifice 40, 50, ces deux orifices étant sensiblement en regard lorsque les deux panneaux sont posés l'un sur l'autre.

Le montage du dispositif de fixation s'effectue de la façon suivante : la plaque 1 est placée contre le panneau supérieur 4, de telle façon que les parties repliées 13 des languettes 12 passent à travers les deux orifices 40, 50, les deux crochets 14 étant alors situés du côté extérieur du panneau inférieur 5.

On exerce alors une pression sur le bouton poussoir 16a de la patte 15, ce qui permet d'insérer le bord replié 17a de la patte 15 dont les évidements 14a prévus sur les parois en vis à vis des crochets 14.

Comme expliqué précédemment au regard des figures 2 et 4, là patte 15 permet de bloquer les crochets 14 en position, ceux-ci restant donc accrochés de façon fiable sur la face extérieure du panneau inférieur 4.

Le dispositif selon l'invention permet donc d'assurer une fixation solide des deux panneaux 4 et 5.

Bien entendu, le dispositif selon l'invention pourrait servir à fixer ensemble plus de deux panneaux, les dimensions de la patte 15 devant être adaptées à l'épaisseur et au nombre de panneaux à fixer ensemble.

Enfin, les signes de référence insérés après les caractéristiques techniques figurant dans les revendications ont pour seul but de faciliter la compréhension de ces dernières.

## Revendications

1. Dispositif de fixation d'au moins une pièce (3,4) sur une autre pièce (2,5), ce dispositif présentant la forme d'une plaque (1) et comportant deux crochets (14) repliés d'un côté de la plaque (1), lesdits crochets (14) étant susceptibles de pénétrer dans un orifice (21 ; 40,50) ménagé dans au moins ladite autre pièce (2,5) pour s'accrocher sur elle, **caractérisé en ce que** ledit dispositif comprend également, en regard desdits crochets (14) et de l'autre côté de la plaque (1), une patte (15) qui peut s'insérer, sous l'effet d'une pression, entre lesdits crochets (14) pour les bloquer sur ladite autre pièce (2,5).

2. Dispositif selon la revendication 1, **caractérisé en ce que** les crochets (14) forment les extrémités de deux languettes (12) découpées dans ladite plaque (1) et repliées sensiblement perpendiculairement au plan de celle-ci.

3. Dispositif selon la revendication 1 ou 2, **caractérisé en ce que** ladite patte (15) est découpée dans ladite plaque (1).

4. Dispositif selon l'une des revendications 1 à 3, **caractérisé en ce que** ladite patte (15) présente une forme générale en L, avec une grande branche (16) élastiquement reliée à ladite plaque (1) et une petite branche (17) repliée vers ladite plaque (1), sensiblement perpendiculairement au plan de celle-ci.

5. Dispositif selon la revendication 4, **caractérisé en ce que** ladite grande branche (16) comporte une platine (16a) formant bouton poussoir.

6. Dispositif selon la revendication 4 ou 5, **caractérisé en ce que** ladite petite branche (17) comporte, à son extrémité libre, un bord (17a) replié vers l'extérieur.

7. Dispositif selon l'une des revendications 2 à 6, **caractérisé en ce que** les parties repliées (13) desdites languettes (12) sont situées dans deux plans sensiblement parallèles et très proches, les deux parties repliées (13) convergeant l'une vers l'autre, au repos, au niveau de leurs extrémités formant crochets (14).

8. Dispositif selon l'une des revendications 1 à 7, **caractérisé en ce que** les crochets (14) comportent des évidements (14a) en vis-à-vis et dans lesquels ladite patte (15) vient se bloquer lorsqu'elle est insérée, par pression, entre les deux crochets (14).

9. Dispositif selon l'une des revendications 2 à 8, **caractérisé en ce que** lesdites languettes (12) et ladite patte (15) sont situées dans une ouverture (19) en forme de quadrilatère, formée dans ladite plaque (1).

10. Dispositif selon l'une des revendications 1 à 9, **caractérisé en ce que** ladite plaque (1) présente une forme sensiblement rectangulaire et comporte des rebords (18) longitudinaux pour en assurer la rigidité.

11. Dispositif selon l'une des revendications 1 à 10 pour la fixation d'une pluralité de vis (3), écrous ou analogues sur une autre pièce (2), la plaque (1) comportant des ouvertures (10) susceptibles de recevoir chacune une tête de vis (30) ou un écrou et de les immobiliser en rotation.

12. Dispositif selon l'une des revendications 1 à 10 pour la fixation de deux panneaux (4,5), chacun desdits panneaux (4,5) comprenant un orifice (40,50), ces orifices étant sensiblement en regard, lorsque les deux panneaux (4,5) sont en contact, pour permettre le passage desdits crochets (14).

## Claims

1. Device for fastening at least one component (3, 4) to another component (2, 5), the device being in the form of a plate (1) and having two hooks (14) bent to one side of the plate (1), the said hooks (14) being able to penetrate into an opening (21; 40,50) provided in at least the said other component (2, 5), to hook onto it, **characterised in that** the said device also has, facing the said hooks (14) and on the other side of the plate (1), a foot (15) which can be inserted under the action of pressure between the said hooks (14) to lock them to the said other component (2, 5).

2. Device according to claim 1, **characterised in that** the hooks (14) form the extremities of two tongues (12) which are cut outs in the said plate (1) and bent approximately perpendicularly with respect to the plane of the latter.

3. Device according to claim 1 or 2, **characterised in that** the said foot (15) is a cut out in the said plate (1).

4. Device according to one of claims 1 to 3, **characterised in that** the said foot (15) is generally L-shaped with a large limb (16) resiliently connected to the said plate (1) and a small limb (17) bent towards the said plate (1) approximately perpendicularly to the plane of the latter.

5. Device according to claim 4, **characterised in that** the said large limb (16) has a flat (16a) constituting a push button.

6. Device according to claim 4 or 5, **characterised in that** the said small limb (17) has, at its free extremity, an edge (17a) bent towards the outside.

7. Device according to one of claims 2 to 6, **characterised in that** the bent parts (13) of the said tongues (12) are located in two approximately parallel planes and very close to each other, the two bent parts (13) converging towards one another, when at rest, at the level of their extremities that form the hooks (14).

8. Device according to one of claims 1 to 7, **characterised in that** the hooks (14) have opposite recesses (14a) into which the said foot (15) becomes locked when it is inserted, by pressure, between the two hooks (14).

9. Device according to one of claims 2 to 8, **characterised in that** the said tongues (12) and the said foot (15) are located within an opening (19) in the form of a quadrilateral formed in the said plate (1).

10. Device according to one of claims 1 to 9, **characterised in that** the said plate (1) is approximately rectangular in shape and has longitudinal flanges (18) to ensure rigidity.

11. Device according to one of claims 1 to 10, for fastening a plurality of screws (3), nuts or the like, onto another component (2), wherein the plate (1) has openings (10) each able to receive the head of a screw (30) or a nut and to secure them against rotation.

12. Device according to one of claims 1 to 10 for fastening two panels (4, 5), wherein each of the said panels (4, 5) includes an aperture (40, 50), these apertures approximately facing each other when the two panels (4, 5) are in contact, to permit the two hooks (14) to pass through.

## Patentansprüche

1. Vorrichtung zum Befestigen wenigstens eines Teils (3, 4) an ein weiteres Teil (2, 5), wobei diese Vorrichtung in Form einer Platte (1) ausgeführt ist und zwei Haken (14) enthält, die an einer Seite der Platte (1) umgebogen sind, wobei die genannten Haken (14) in eine Öffnung (21; 40, 50) eingreifen können, die zumindest im weiteren Teil (2, 5) vorgesehen ist, um sich an diesem einzuhängen, **dadurch gekennzeichnet, dass** die genannte Vorrichtung den genannten Haken (14) gegenüberliegend auf der anderen Seite der Platte (1) eine Lasche (15) enthält, die unter der Wirkung einer Druckkraft sich zwischen die genannten Haken (14) einfügt, um diese am genannten weiteren Teil (2, 5) zu sichern.

2. Vorrichtung nach Anspruch 1, **dadurch gekennzeichnet, dass** die Haken (14) die Enden zweier Zungen (12) bilden, die aus der genannten Platte (1) ausgeschnitten sind und im wesentlichen senkrecht zu deren Ebene umgebogen sind.

3. Vorrichtung nach Anspruch 1 oder 2, **dadurch gekennzeichnet, dass** die genannte Lasche (15) in der genannten Platte (1) ausgeschnitten ist.

4. Vorrichtung nach einem der Ansprüche 1 bis 3, **dadurch gekennzeichnet, dass** die genannte Lasche (15) insgesamt eine L-Form hat, wobei ein größerer Schenkel (16) elastisch mit der Platte (1) verbunden ist und ein kleinerer Schenkel (17) zur Platte (1) hin im wesentlichen senkrecht zu deren Ebene umgebogen ist.

5. Vorrichtung nach Anspruch 4, **dadurch gekennzeichnet, dass** der genannte größere Schenkel (16) eine druckknopfartige Fläche (16a) enthält.

6. Vorrichtung nach Anspruch 4 oder 5, **dadurch gekennzeichnet, dass** der kleinere Schenkel (17) an seinem freien Ende einen nach außen umgebogenen Rand (17a) enthält.

7. Vorrichtung nach einem der Ansprüche 2 bis 6, **dadurch gekennzeichnet, dass** die umgebogenen Bereiche (13) der Zungen (12) sich in zwei im wesentlichen parallel verlaufenden und sehr nahe beieinander liegenden Ebenen befinden, wobei die umgebogenen Bereiche (13) in Ruhestellung an ihren hakenförmigen Enden (14) aufeinander zu laufen.

8. Vorrichtung nach einem der Ansprüche 1 bis 7, **dadurch gekennzeichnet, dass** die Haken (14) gegenüberliegende Ausnehmungen (14a) aufweisen, in welchen die genannte Lasche (15) gesichert wird, wenn sie unter Druck zwischen den beiden Haken (14) eingefügt ist.

9. Vorrichtung nach einem der Ansprüche 2 bis 8, **dadurch gekennzeichnet, dass** die genannten Zungen (12) und die genannte Lasche (15) in einer viereckigen Öffnung (19) liegen, die in der genannten Platte (1) gebildet ist.

10. Vorrichtung nach einem der Ansprüche 1 bis 9, **dadurch gekennzeichnet, dass** die genannte Platte (1) eine im wesentlichen rechteckige Form hat und Längsränder (18) enthält, um deren Steifigkeit zu gewährleisten.

11. Vorrichtung nach einem der Ansprüche 1 bis 10 zum Befestigen einer Mehrzahl von Schrauben (3), Muttern oder dergleichen an einem weiteren Teil (2), wobei die Platte (1) Öffnungen (10) enthält, die jeweils einen Schraubenkopf (30) oder eine Mutter aufnehmen und drehfest festlegen können.

12. Vorrichtung nach einem der Ansprüche 1 bis 10 zum Befestigen zweiter Paneele (4, 5), wobei jedes Paneel (4, 5) eine Öffnung (40, 50) enthält, wobei diese Öffnungen im wesentlichen einander gegenüberliegen, wenn die beiden Paneele (4, 5) in Kontakt stehen, um den Durchtritt der genannten Haken (14) zu ermöglichen.
